# EUROPEAN PATENT SPECIFICATION

(11) **EP 1 476 701 B1**
(45) Date of publication and mention of the grant of the patent: **09.11.2016**
(21) Application number: 03742670.7
(22) Date of filing: 20.02.2003
(51) Int. Cl.: F25B 40/02, F28F 9/02, F28D 1/053, F28D 21/00, F25B 39/04

(54) **REFRIGERATION SYSTEM AND ITS CONDENSING APPARATUS**
KÜHLSYSTEM UND SEINE KONDENSATIONSVORRICHTUNG
SYSTEME DE REFRIGERATION ET SON APPAREIL DE CONDENSATION

(30) Priority: 20.02.2002 JP 2002043367; 12.03.2002 US 363285 P
(43) Date of publication of application: 17.11.2004
(73) Proprietor: Keihin Thermal Technology Corporation, Oyama-shi Tochigi 323-8678 (JP)
(72) Inventor: Seno, Yoshihiko, Showa Denko K.K., Oyama-shi, Tochigi 323-0811 (JP); Kamoshida, Osamu, Showa Denko K.K., Oyama-shi, Tochigi 323-0811 (JP); Yamazaki, Keiji, Showa Denko K.K., Oyama-shi, Tochigi 323-0811 (JP)
(74) Representative: Viering, Jentschura & Partner mbB Patent- und Rechtsanwälte
(86) International application number: PCT/JP2003/001845
(87) International publication number: WO 2003/071201

(56) References cited:
- EP-A- 0 915 308
- EP-A- 1 089 043
- FR-A- 2 777 639
- JP-A- 11 316 065
- US-A- 6 158 503

## Description

Priority is claimed to Japanese Patent Application No. 2002-43367 filed on February 20, 2002 and a U. S. Provisional Patent Application No. 60/3 63,285 filed on March 12, 2002.

### Technical Field

The present invention relates to a heat exchanger with a receiver-tank according to claim 1 suitably used for, for example, a car air-conditioning refrigeration apparatus, and also relates to a refrigeration system.

### Background Art

A heat exchanger of the initially-mentioned type is known, e.g., from US-A-6158503. FR-A-2 777 639 discloses a heat exchanger with a receiver-tank according to the preamble of claim 1. In recent years, in a condensing process of a refrigerant in a refrigeration cycle for a car air-conditioning system or the like, a technique for subcooling a condensed refrigerant to a temperature lower than the condensing temperature by several degrees is proposed. In this technique, the refrigerant whose heat releasing amount was increased by the subcooling is introduced to a decompressing means and an evaporator so as to increase the heat absorption amount at the time of the refrigerant evaporation, to thereby improve the refrigeration capacity.

In performing this proposed technique, a heat exchanger with a receiver-tank (subcool system condenser) in which a receiver-tank is attached to a heat exchanger integrally provided with a condensing portion and a subcooling portion is now under development.

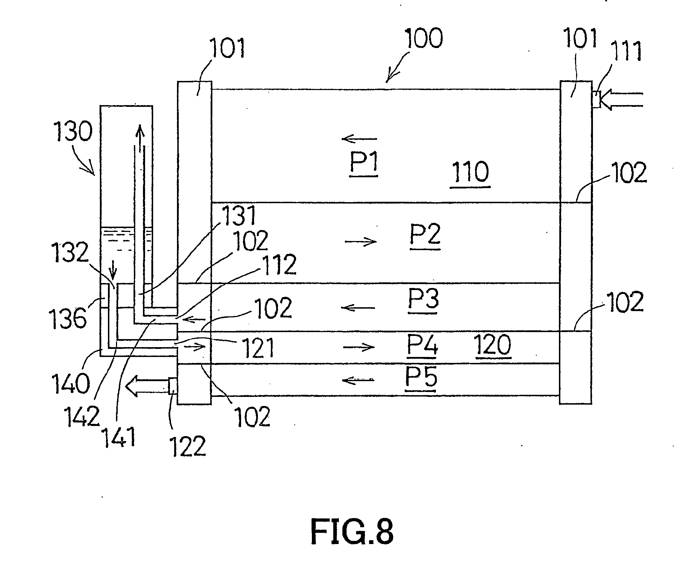

As shown in Fig. 8 , in this heat exchanger with a receiver-tank, a heat exchanger main body 100 includes a pair of headers 101 and 101 and a plurality of heat exchanging tubes 100 disposed in parallel with their opposite ends communicated with the headers. The heat exchanging tubes are classified into a plurality of passes P1 to P5 by partitions 102 provided in the headers 101. The passes P1-P3 constitute a condensing portion 110, and the passes P4 and P5 constitute a subcooling portion 120 independent to the condensing portion 110.

A condensing portion inlet 111 and a condensing portion outlet 112 are provided at the upper and lower portions of the condensing portion 110 of the header 101, respectively. A subcooling portion inlet 121 and a subcooling portion outlet 122 are provided at the upper and lower portions of the subcooling portion 120 of the header 101, respectively.

A receiver-tank 130 attached to the header 101 is provided with a receiver-tank inlet 131 communicated with the condensing portion outlet 112 and a receiver tank outlet 132 communicated with the subcooling portion inlet 121.

In this heat exchanger with a receiver-tank, the gaseous refrigerant flowed into the condensing portion 110 from the condensing portion inlet 111 is condensed by exchanging heat between the refrigerant and the ambient air while passing through each of the passes P1 to P3 of the condensing portion 110. The condensed refrigerant is introduced into the receiver-tank 130 via the condensing portion outlet 112 and the receiver-tank inlet 131, and once stored in the receiver-tank. Then, only the liquefied refrigerant is introduced into the subcooling portion 120 via the receiver tank outlet 132 and the subcooling portion inlet 121. Furthermore, the liquefied refrigerant flowed into the subcooling portion 120 is subcooled by the ambient air while passing through the fourth and fifth passes P4 and P5, and then flows out of the subcooling portion outlet 122.

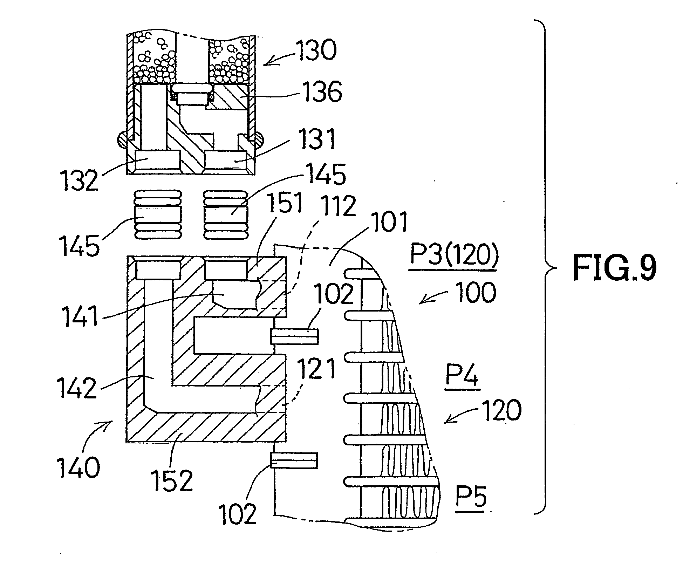

In the heat exchanger integrally provided with such a receiver-tank, for example, as shown in Fig. 9, the receiver-tank 130 is connected to the heat exchanger main body 100 via a joint member such as a block flange 140.

This flange 140 is integrally provided with a first block 151 joined to the condensing portion outlet 112 or the vicinity thereof of one of the headers 101 of the heat exchanger main body 100 and a second block 152 joined to the subcooling portion inlet 131 or the vicinity thereof. The first block 151 is provided with an inlet flow passage 141 having one end (outlet side end portion) opened to the flange upper surface and the other end (inlet side end portion) communicating with the condensing portion outlet 112. The second block 152 is provided with an outlet flow passage 142 having one end (inlet side end portion) opened to the flange upper surface and the other end (outlet side end portion) communicating with the subcooling portion inlet 121.

On the other hand, the receiver-tank 130 is provided with a lower end closing member 136 having a receiver-tank inlet 131 and a receiver tank outlet 132 each communicating with the inside of the tank.

The receiver-tank inlet and outlet 131 and 131 are joined to and communicated with the end portions of the inlet flow passage 141 and the outlet flow passage 142 of the block flange 140 via joint pipes 145 and 145, respectively. In this joined state, the receiver-tank 140 is attached to the upper surface of the block flange 140.

In the refrigeration system for a car air-conditioner to which the aforementioned heat exchanger with a receiver-tank is applied, it is required to be small in size and light in weight in order to effectively use the limited space in a car body.

However, when making the receiver-tank 130 smaller, the tank volume becomes smaller, and therefore the stable range of the refrigerant, i.e. , the stable range in the subcooling state of the refrigerant with respect to the amount of sealed refrigerant becomes narrower. This tends to cause an excessive or shortage of sealed amount of refrigerant, resulting in unstable refrigeration performance.

Furthermore, when making the heat exchanger main body 100 smaller, the core area for refrigerant condensation becomes smaller. This makes it difficult to stably supply a liquefied refrigerant, resulting in poor refrigeration performance.

On the other hand, in the condensing apparatus such as the aforementioned heat exchanger with a receiver-tank or a refrigeration system, it is actually required to decrease the number of parts, improve the workability and decrease the costs besides the aforementioned miniaturization. Fr-A-2 777 639, EP-A-1 083 043, EP-A-0 915 308 and US-A-6 158 503 respectivily describe a heat exchanger having a separate partition plate.

It is an object of the present invention to solve the problems of the aforementioned prior art, provide a condensing apparatus such as a heat exchanger with a receiver-tank etc. capable of miniaturizing, obtaining stable refrigeration performance, decreasing the number of parts and the costs and improving assembling workability, and to provide a refrigeration system.

### Disclosure of Invention

In order to attain the aforementioned object, the invention provides a heat exchanger according to claim 1. Further embodiments of the heat exchanger of the present invention are described in claims 2-8.
[1] A heat exchanger with a receiver-tank, comprising:
   a heat exchanger main body including a pair of headers and a plurality of heat exchanging tubes disposed in parallel with opposite ends thereof communicated with the headers, wherein a refrigerant is condensed by a condensing portion constituted by the heat exchanging tubes;
   a receiver-tank provided with a receiver-tank inlet and a receiver-tank outlet at a lower end thereof, wherein the refrigerant introduced via the receiver-tank inlet is stored and only the liquefied refrigerant flows out of the receiver-tank outlet; and
   a joint member for connecting the receiver-tank to one of the pair of headers,
   wherein the joint member includes a joint member main body to be attached to the lower end of the receiver-tank, an embedding portion provided at a side portion of the joint member main body to be embedded in the one of the pair of headers , and an inlet flow passage having an inlet side end portion disposed at an upper end surface of the embedding portion to be communicated with the condensing portion and an outlet side end portion disposed at an upper end surface of the joint member main body to .be communicated with the receiver-tank inlet,
   wherein a flange-like partition piece protruded outwardly is integrally formed at an upper end periphery of the embedding portion of the joint member, a peripheral edge of the flange-like partition piece being joined to an inner peripheral surface of the one of the pair of headers, and an inside of the one of the pair of headers being divided by the flange-like partition piece, and
   whereby the refrigerant condensed by the condensing portion is introduced into an inside of the receiver-tank via the inlet side end portion of the inlet flow passage in the joint member.

   In the heat exchanger with a receiver-tank of the invention, since the embedding portion of the receiver-tank joint member is secured to one of the headers in the state where the embedding portion is embedded in one of the headers, the installation space of the embedding portion can be omitted. Furthermore, since the flange-like partition piece is integrally provided at the inlet or its vicinity of the inlet flow passage at the upper end surface of the embedding portion to thereby divide the inside of one of the headers, it is not necessary to attach an additional partition for dividing the inside of the header, and therefore the number of components can be decreased.
   Furthermore, since a part of the joint member is embedded in one of the headers, the receiver-tank to be attached to the joint member can be further approached to the header. Thus, the miniaturization can be attained.
   In the invention, it is preferable to employ the following [2] to [6] structures.
[2] The heat exchanger with a receiver-tank as recited in [1], wherein the outlet side end portion of the inlet flow passage of the joint member is positioned lower than the inlet side end portion.
   In this structure, the assembling position of the receiver-tank can be positioned lower. Thus, a longer receiver-tank can be used, which enables to keep the tank volume large enough.
[3] The heat exchanger with a receiver-tank as recited in [1], wherein an inlet side half portion of the inlet flow passage of the joint member is formed as a refrigerant descent passage for descending the refrigerant downward.
   In this structure, the assembling position of the receiver-tank can be assuredly positioned lower.
[4] The heat exchanger with a receiver-tank as recited in [3], wherein the refrigerant descent passage is disposed so that a passage direction thereof is inclined to an axis of the one of the pair of headers.
   In this structure, since the upper end opening area of the descent passage can be formed larger as compared with the case where a passage is disposed in parallel to the axis of the header, the refrigerant can be introduced smoothly and efficiently, and therefore the pressure loss of the refrigerant can be reduced.
[5] The heat exchanger with a receiver-tank as recited in [1], wherein an outlet side half portion of the inlet flow passage of the joint member is formed as a refrigerant ascent passage for raising the refrigerant upward.
   In this structure, since the refrigerant can be introduced into the receiver-tank in a stabilized manner, and therefore the vapor-liquid-separation performance by the receiver-tank can be improved.
[6] The heat exchanger with a receiver-tank as recited in [5], wherein the refrigerant ascent passage is disposed so that a passage direction thereof is approximately parallel to an axis of the one of the pair of headers.
   In this structure, the refrigerant can be introduced into the receiver-tank in a further stabilized manner, and therefore the vapor-liquid-separation performance can be further improved.
   The heat exchanges of claim 7 is directed to the so-called subcool system condenser having a subcooling portion in the heat exchanger main body, and has the following additional structure.
[7] An inside of each of the headers is divided at the same height to thereby form an upper side condensing portion and a lower sidle subcooling portion;
   wherein the joint member further includes an outlet flow passage having an inlet side end portion disposed at an upper end surface of the joint member main body to be communicated with the receiver-tank outlet and an outlet side end portion disposed at a portion below the embedding portion to be communicated with the subcooling portion,
   whereby the refrigerant in the receiver-tank is introduced into the subcooling portion from the outlet side end portion of the outlet flow passage through the outlet flow passage of the joint member.
   In this heat exchanger too, the same functions and effects as mentioned above can be obtained. Further, it is preferable to employ the following structure [8].
[8] The heat exchanger with a receiver-tank as recited in [7], wherein the outlet side end portion of the inlet flow passage of the joint member is disposed at a height corresponding to the subcooling portion.

The invention further provides a refrigeration system according to claim 9.

Other objects and advantages of the present invention will be apparent from the following preferred embodiments.

### Brief Description of Drawings

Fig. 1 is a front view showing the both side portions of the heat exchanger with a receiver-tank according to an embodiment of the present invention.
Fig. 2 is an enlarged front cross-sectional view showing the block flange and its vicinity of the heat exchanger of the embodiment.
Fig. 3 is an exploded front cross-sectional view showing the block flange and its vicinity of the heat exchanger of the embodiment.
Fig. 4 is a perspective view showing the block flange of the embodiment.
Fig. 5 is a plan view showing the block flange of the embodiment.
Fig. 6 is a cross-sectional view showing the block flange of the embodiment.
Fig. 7 is an enlarged plan view showing the circumference of the inlet port of the inlet flow passage and its vicinity of the block flange of the embodiment.
Fig. 8 is a schematic front view showing refrigerant flowing passes of a conventional heat exchanger with a receiver-tank.
Fig. 9 is an explored front cross-sectional view showing the block flange and its vicinity of a conventional heat exchanger with a receiver-tank.

### Best Mode for Carrying Out the Invention

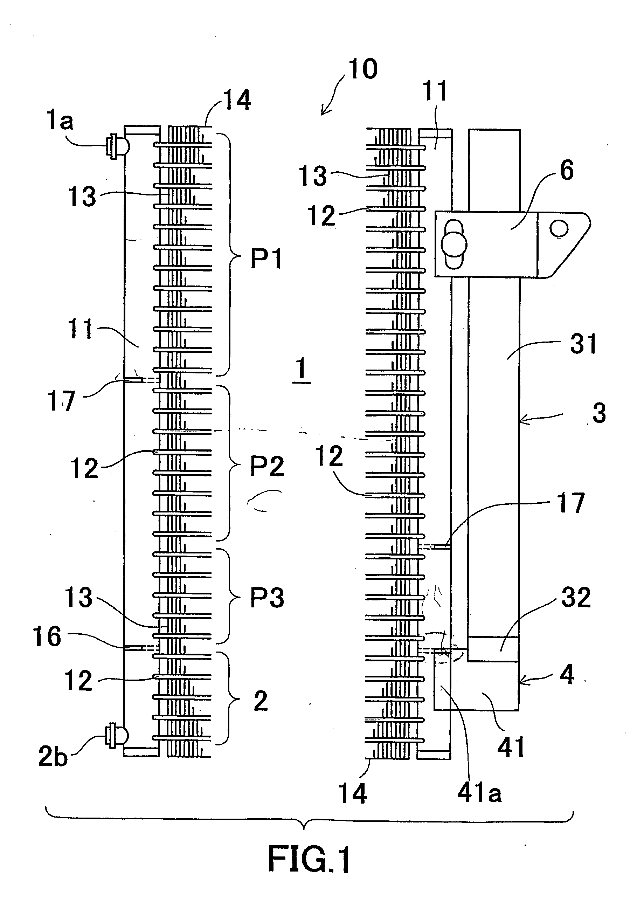

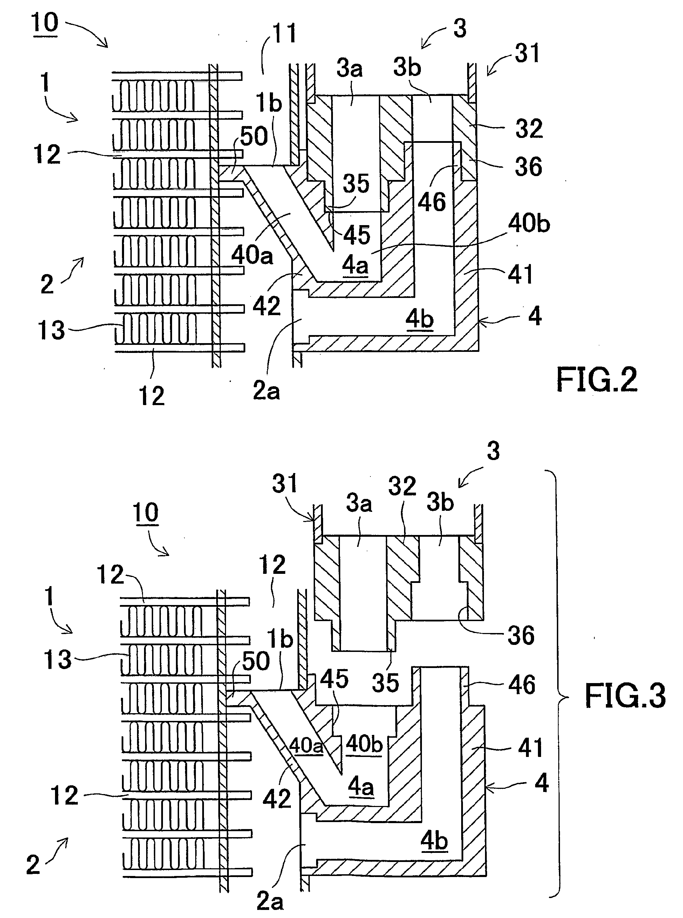

Fig. 1 is a front view showing the both side portions of the heat exchanger with a receiver-tank according to an embodiment of the present invention, Fig. 2 is an enlarged front cross-sectional view showing the block flange and its vicinity of the heat exchanger of the embodiment, and Fig. 3 is an exploded front cross-sectional view showing the block flange and its vicinity of the heat exchanger of the embodiment.

As shown in these figures, this heat exchanger is provided with a multi-flow type heat exchanger main body 10, a receiver-tank 3 and a block flange 4 constituting a joint member for connecting the receiver-tank 3 to the heat exchanger main body 10.

The heat exchanger main body 10 includes a pair of right and left vertical headers 11 disposed at a certain distance. Between this pair of headers 11, a number of horizontally disposed flat tubes 12 as heat exchanging tubes are arranged in parallel with each other at certain intervals with opposite ends thereof communicated with the headers 11. Corrugated fins 13 are disposed between the adjacent flat tubes 12 and at the outside of the outermost flat tube 12, and a side plate 14 is provided at the outside of the outermost corrugated fin 13.

At the predetermined height position of one of the headers 11 of the heat exchanger main body 10, a flange-like partition 50 of a block flange 4 which will be detailed is provided. At the same height position as the aforementioned partition 50 in the other header 11, a partitioning plate 16 is provided. Both the headers 11 are partitioned at the same height by these partitions 50 and 16. The upper flat tubes 12 above these partitions 16 and 50 constitute a condensing portion 1, and the lower flat tubes 12 constitute a subcooling portion 2 independent to the aforementioned condensing portion 1.

Furthermore, at certain height positions in the headers 11 in the condensing portion 1, partitioning plates 17 for turning the refrigerant flow are provided. Thus, in the heat exchanger main body 10 of this embodiment, the condensing portion 1 is divided into three passes, i.e., First pass P1 to Third pass P3.

Furthermore, at the upper portion of the other header 11 of the heat exchanger main body 10, a condensing portion inlet 1a corresponding to the first pass P1 is provided. On the other hand, at the lower portion, a subcooling portion outlet 2b corresponding to the subcooling portion 2 is provided.

The receiver-tank 3 is provided with a tank main body 31 made of a vertically extending tubular member with an upper closed end and a lower opened end and an inlet-and-outlet forming member 32 attached to the lower opened end of the tank main body 31 so as to close the lower opened end.

At the lower surface side of the inlet-and-outlet forming member 32, an inlet convex stepped portion 35 is formed so as to protrude downwardly. In the convex stepped portion 35, a receiver-tank inlet 3a which communicates with the inside of the tank main body 31 is formed.

Furthermore, at the lower surface side of the inlet-and-outlet forming member 32, an outlet concave stepped portion 36 is formed so as to dented upwardly. In the concave stepped portion 36, a receiver-tank outlet 3b communicating with the inside of the tank main body 31 is formed.

This receiver-tank 3 is constituted such that the refrigerant flowed into the tank main body 31 via the inlet 3a is once stored in the tank main body 31 and then only the liquefied refrigerant flows out of the receiver-tank outlet 3b.

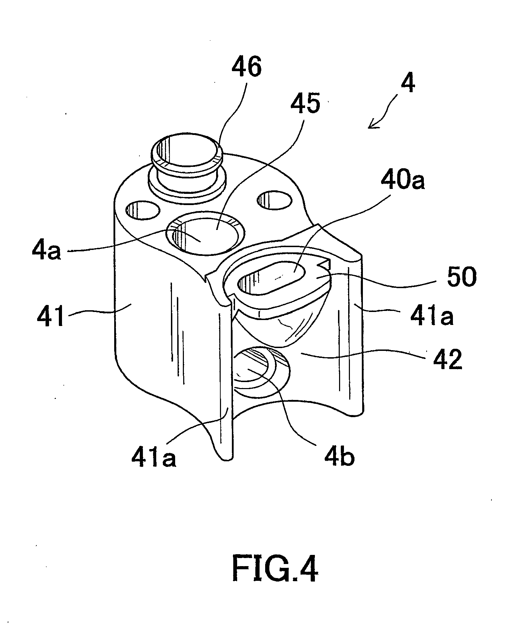

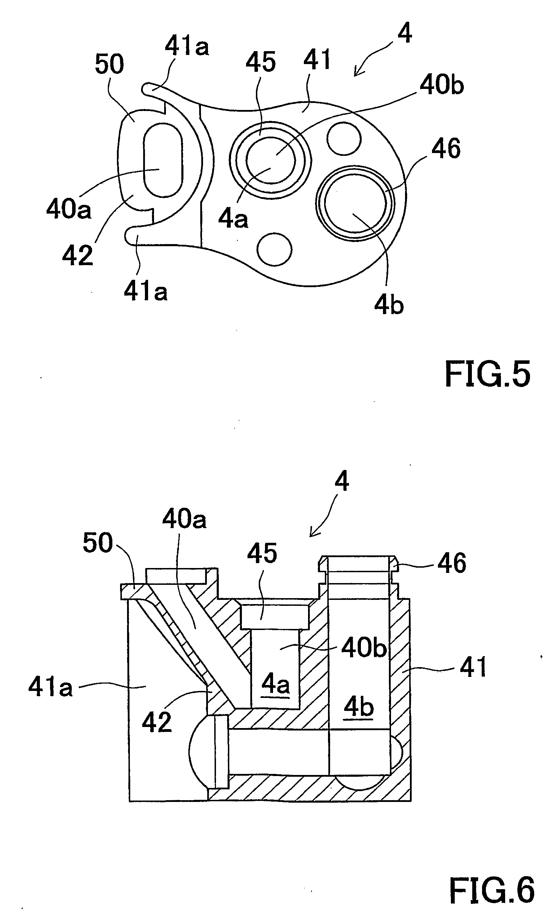

On the other hand, as shown in Figs. 2 to 6, the block flange 4 is provided with a main body 41 and an embedding portion 42 integrally protruded sideways from the side surface of the main body 41.

At the upper surface of the flange main body 41, an inlet concave stepped portion 45 for fitting the inlet convex stepped portion 35 of the aforementioned receiver-tank 3 and an outlet convex stepped portion 46 for fitting the outlet concave stepped portion 36 of the aforementioned receiver-tank 3 are formed.

In the inside of this block flange 4, an inlet flow passage 4a for connecting the condensing portion 1 to the receiver-tank 3 in fluid communication and an outlet flow passage 4b for connecting the receiver-tank 3 to the subcooling portion 2 are provided.

The one end (inlet side end portion) of the inlet flow passage 4a is opened at the upper surface of the embedding portion 42, and the other end (outlet side end portion) is opened at the upper surface of the inlet concave stepped portion 45.

The inlet side half portion of this inlet flow passage 4a constitutes a refrigerant descent passage 40a inclined downwardly, and the outlet side half portion thereof constitutes a refrigerant ascent passage 40b ascended vertically.

Furthermore, in this inlet flow passage 4a, it is constituted such that the inlet side end portion is disposed at a position higher than the outlet side end portion.

In the outlet flow passage 4b, the one end (inlet side end portion) is opened at the upper surface of the outlet convex stepped portion 46, and the other end (outlet side end portion) is opened at the side outside surface of the embedding portion 42.

Furthermore, at the upper end periphery of the embedding portion 42 of the block flange 4, an outwardly extended flange-like partition piece 50 is integrally provided. This flange-like partition piece 50 has a peripheral configuration conforming to the inner periphery of the header 11.

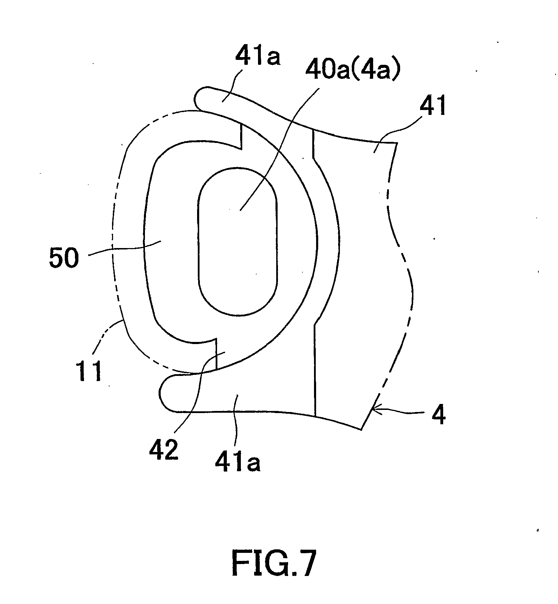

As shown in Figs. 2 and 8, the embedding portion 42 of the block flange 4 is embedded between the condensing portion 1 and the subcooling portion 2 in the header 11, so that the peripheral portions 41a and 41a at the embedding portion side of the flange main body 41 are secured to the header 11 in an air-tight manner. Furthermore, as shown in Figs. 2 and 7, the peripheral edge of the flange-like partition piece 50 at the upper end of the embedding portion is secured to the inner circumferential surface of the header 11 continuously along the circumferential direction. Thus, this flange-like partition piece 50 constitutes a partition for dividing the inside of the header 11 between the condensing portion 1 and the subcooling portion 2.

Furthermore, in this joining state, the inlet side end portion of the inlet flow passage 4a is opened to and communicates with the condensing portion 1 to thereby constitute a condensing portion outlet 1b, and the outlet side end portion of the outlet flow passage 4b is opened to and communicates with the subcooling portion 2 to thereby constitute a subcooling portion inlet 2a.

In this embodiment, the outlet side end portion of the inlet flow passage 4a is positioned at the height corresponding to the height of the upper end portion of the subcooling portion 2. Furthermore, the outlet side end portion of the inlet flow passage 4a is positioned at the height lower than the height of the inlet side end portion of the inlet flow passage 4a, i.e. , the condensing portion outlet 1b.

As shown in Figs. 2 and 3, the concave and convex stepped portions 35 and 36 of the aforementioned receiver-tank 3 are fitted to the concave and convex stepped portions 45 and 46 of the block flange 4 in an air-tight manner, so that the lower end of the receiver-tank 3 is attached to the block flange 4.

Furthermore, as shown in Fig. 1, the upper portion of the receiver-tank 3 is fixed to one of the headers 11 via a bracket 6.

In the heat exchanger with a receiver-tank of this embodiment, each core-constituting component, such as the header 11, the flat tube 12, the fin 13, the side plate 14, the receiver-tank 3 and the block flange 4, is made of aluminum (including its alloy) or constituted by an aluminum brazing sheet, etc. These components assembled via brazing members are brazed in a furnace.

In this embodiment, at the time of this brazing, the flange-like partition piece 50 of the block flange 4 is secured to the inner surface of the header 11.

The aforementioned heat exchanger with a receiver-tank is used as a condensing apparatus in a car air-conditioning refrigeration system together with a compressor, a decompressing means such as an expansion valve and an evaporator. In this refrigeration cycle, the gaseous refrigerant of high temperature and high pressure compressed by the compressor is introduced into the condensing portion 1 via the condensing portion inlet 1a and exchanges heat between the refrigerant and the ambient air while passing through the first to third passes P1 to P3 in a meandering manner.

This condensed refrigerant is introduced into the inlet flow passage 4a of the block flange 4 via the condensing portion outlet 1b, and passes through the inlet flow passage 4a to be introduced into the receiver-tank 3 from the receiver-tank inlet 3a.

The refrigerant introduced in the receiver-tank 3 is once stored in the tank, and only the liquefied refrigerant flows out of the receiver-tank outlet 3b, and it is introduced in the subcooling portion 2 via the outlet flow passage 4b from the outlet side end portion of the outlet flow passage 4b, i.e. , the subcooling portion inlet 2a.

The liquefied refrigerant introduced in the subcooling portion 2 is subcooled by the ambient air while passing through the subcooling portion 2, and then it flows out through the subcooling portion outlet 2b.

In this way, the liquefied refrigerant flowed out of the heat exchanger with a receiver-tank is decompressed by the expansion valve, and then evaporated by absorbing hear from the ambient air. Then, the evaporated refrigerant returns to the aforementioned compressor. In this way, the refrigerant circulates in the refrigeration cycle of the refrigeration system, and a predetermined refrigeration performance can be obtained.

As mentioned above, according to the heat exchanger with a receiver-tank of this embodiment, since the block flange 4 for connecting a receiver-tank is secured the header 11 such that the embedding portion 42 is embedded in the header 11 of the heat exchanger main body 10, the installation space for the embedding portion 42 can be omitted, and therefore the miniaturization can be attained.

Furthermore, the flange-like partition piece 50 is integrally provided at the vicinity of the inlet of the inlet flow passage 4a at the upper end surface of the embedding portion 42, and the inside of the header 11 is divided by the partition piece 50 to thereby classify the core into the condensing portion 1 and the subcooling portion 2. Therefore, an additional partitioning member for partitioning the core into the condensing portion 1 and the subcooling portions 2 is not required to assemble, resulting in a reduced number of components and simplified assembling work, which in turn can reduce the manufacturing costs.

Furthermore, since a part 42 of the block flange 4 is embedded in one of the headers 11, the receiver-tank 3 to be joined to the block flange 4 can be approximated to the header 11 as much as possible, and therefore the entire heat exchanger can be further miniaturized.

Furthermore, in this embodiment, since the inlet side of the inlet flow passage 4a in the block flange 4 is inclined downward and the outlet side end portion of the inlet flow passage 4a is positioned lower than the inlet side end portion, the installation position of the receiver-tank 3 can be lowered, which enables to use a longer receiver-tank 3. Accordingly, the tank volume of the receiver-tank 3 can be kept large enough, the stable range in the subcooling state of a refrigerant can be enlarged, the excess and shortage of the sealed amount of refrigerant can be prevented, the stable refrigeration performance can be obtained, and therefore the refrigeration performance can be improved.

Furthermore, since a longer tank can be used as the receiver-tank 3, a tank having smaller diameter can be used while keeping enough tank volume, which in turn can miniaturize the receiver-tank 3.

Furthermore, in this embodiment, since the descent passage 40a in the inlet flow passage 4a of the block flange 4 is inclined to the axis of the header 11 and the upper end opening of the descent passage 40a is disposed perpendicularly to the axis of the header 11, the upper end opening area of the descent passage 40a can be formed larger than the flow passage area in the middle of the descent passage 40a. Thus, since the upper end opening area of the descent passage 40a can be formed larger, the refrigerant can be introduced smoothly and efficiently, the pressure loss can be reduced and the refrigerant can be supplied more stably, and therefore the refrigeration performance can be further improved.

Just for reference, in this embodiment, the upper end opening area (condensing portion outlet 1b) of the descent passage 40a is set to be about 62 mm².

In the aforementioned embodiment, although the present invention was explained by exemplifying the case where the invention is applied to the heat exchanger with a receiver-tank in which the subcooling portion is formed in the heat exchanger main body, the so-called subcool system condenser, the present invention is not limited to the above. The present invention can also be applied to a heat exchanger in which a condenser and a subcooler are provided separately and a heat exchanger with a receiver-tank in which a subcooling portion is not formed in a heat exchanger main body such as a condenser with a receiver-tank.

Furthermore, in the aforementioned embodiment, although the inlet-and-outlet forming member is formed apart from the tank main body, the present invention is not limited to it, but can also be applied to the one in which an inlet-and-outlet forming member is integrally provided to a tank main body.

Furthermore, needless to say, neither the number of passes of the heat exchanger main body nor the number of heat exchanging tubes of each pass is limited to the above.

As mentioned above, according to the present invention, since the receiver-tank joint member is secured to the header of the heat exchanger main body in the state where the embedding portion is embedded in the header, the installation space of the embedding portion can be omitted, therefore the miniaturization can be attained. Furthermore, since the flange-like partition piece is integrally provided at the vicinity of the inlet flow passage at the upper surface of the embedded portion to thereby divide the inside of one of the headers, it is not necessary to attach an additional partition for dividing the inside of the header. Thus, the number of components can be reduced and the assembling work can be performed easily, resulting in reduced costs. Furthermore, since a part of a joint member is embedded in one of headers, the receiver-tank to be attached to the joint member can be further approached to the header, which can further miniaturize the assembly.

In the present invention, in cases where the inflow side of the inlet flow passage in the joint member is formed downwardly, since the outlet side end portion of the inlet flow passage can be positioned lower than the inlet side end portion, the installation position of the receiver-tank to be attached can be positioned lower. Therefore, a longer receiver-tank can be used. Accordingly, the tank volume of the receiver-tank can be kept large enough, the stable range in the subcooling state of the refrigerant can become larger, the excess and shortage of the sealed amount of the refrigerant can be prevented and the stable refrigeration performance can be obtained. Thus, the refrigeration performance can be further improved. Furthermore, since a longer tank can be used as the receiver-tank, a tank having smaller diameter can be used while keeping enough tank volume. Thus, a further miniaturization can be attained.

Furthermore, in the present invention, in cases where the descent passage in the inlet flow passage of the joint member is inclined to the axis of the header, the upper end opening area of the descent passage can be formed larger. Accordingly, the refrigerant can be introduced smoothly and efficiently, the pressure loss can be reduced, the refrigerant can be supplied in a more stabilized manner, and the refrigeration performance can be further improved.

The terms and expressions which have been employed herein are used as terms of description and not of limitation, and there is no intent, in the use of such terms and expressions, of excluding any of the equivalents of the features shown and described or portions thereof, but it is recognized that various modifications are possible within the scope of the invention claimed.

### Industrial Applicability

As mentioned above, according to the refrigeration system and its condensing apparatus of the present invention, since miniaturization can be attained while keeping the excellent performance, it can be suitably used especially for a car air-conditioning refrigeration apparatus.

## Claims

1. A heat exchanger with a receiver-tank (3), comprising:
a heat exchanger main body (10) including a pair of headers (11) and a plurality of heat exchanging tubes (12) disposed in parallel with opposite ends thereof communicated with said headers (11), wherein a refrigerant is condensed by a condensing portion (1) constituted by said heat exchanging tubes (12);
a receiver-tank (3) provided with a receiver-tank inlet (3a) and a receiver-tank outlet (3b) at a lower end thereof, wherein the refrigerant introduced via said receiver-tank inlet (3a) is stored and only the liquefied refrigerant flows out of said receiver-tank outlet (3b); and
a joint member (4) for connecting said receiver-tank (3) to one of said pair of headers (11),
wherein said joint member (4) includes a joint member main body (41) to be attached to the lower end of said receiver-tank (3), wherein
said joint member (4) further includes
an embedding portion (42) provided at a side portion of said joint member main body (41) to be embedded in said one of said pair of headers (11), and an inlet flow passage (4a) having an inlet side end portion disposed at an upper end surface of said embedding portion (42) to be communicated with said condensing portion (1) and an outlet side end portion disposed at an upper end surface of said joint member main body (41) to be communicated with said receiver-tank inlet (3a), **characterized in that**
a flange-like partition piece (50) protruded outwardly is integrally formed at an upper end periphery of said embedding portion (42) of said joint member (4), a peripheral edge of said flange-like partition piece (50) being joined to an inner peripheral surface of said one of said pair of headers (11), and an inside of said one of said pair of headers (11) being divided by said flange-like partition piece (50),
whereby the refrigerant condensed by said condensing portion (1) is introduced into an inside of said receiver-tank (3) via said inlet side end portion of said inlet flow passage (4a) in said joint member (4).

2. The heat exchanger with a receiver-tank (3) as recited in claim 1, wherein said outlet side end portion of said inlet flow passage (4a) of said joint member (4) is positioned lower than said inlet side end portion.

3. The heat exchanger with a receiver-tank (3) as recited in claim 1, wherein an inlet side half portion of said inlet flow passage (4a) of said joint member (4) is formed as a refrigerant descent passage (40a) for descending the refrigerant downward.

4. The heat exchanger with a receiver-tank (3) as recited in claim 3, wherein said refrigerant descent passage (40a) is disposed so that a passage direction thereof is inclined to an axis of said one of said pair of headers (11).

5. The heat exchanger with a receiver-tank (3) as recited in claim 1, wherein an outlet side half portion of said inlet flow passage (4a) of said joint member (4) is formed as a refrigerant ascent passage (40b) for raising the refrigerant upward.

6. The heat exchanger with a receiver-tank (3) as recited in claim 5, wherein said refrigerant ascent passage (40b) is disposed so that a passage direction thereof is approximately parallel to an axis of said one of said pair of headers (11).

7. The heat exchanger with a receiver-tank (3) according to any of claims 1-6, wherein an inside of each of said headers (11) is divided at the same height to thereby form an upper side condensing portion (1) and a lower side subcooling portion (2);
wherein said joint member (4) further includes an outlet flow passage (4b) having an inlet side end portion disposed at an upper end surface of said joint member main body (41) to be communicated with said receiver-tank outlet (3b) and an outlet side end portion disposed at a portion below said embedding portion (42) to be communicated with said subcooling portion (2),
whereby the refrigerant in said receiver-tank (3) is introduced into said subcooling portion (2) from said outlet side end portion of said outlet flow passage (4b) through said outlet flow passage (4b) of said joint member (4).

8. The heat exchanger with a receiver-tank (3) as recited in claim 7, wherein said outlet side end portion of said inlet flow passage (4a) of said joint member (4) is disposed at a height corresponding to said subcooling portion (2).

9. A refrigeration system in which a refrigerant compressed by a compressor is condensed by a heat exchanger with a receiver-tank (3), the condensed refrigerant is passed through a decompressing device to be decompressed and the decompressed refrigerant is evaporated by an evaporator and then returned to said compressor,
wherein said heat exchanger with a receiver-tank (3) is a heat exchanger according to any of claims 1 to 8.

## Patentansprüche

1. Ein Wärmetauscher mit einem Aufnahmebehälter (3), aufweisend:
einen Wärmetauscher-Hauptkörper (10), aufweisend ein Paar von Kopfteilen (11) und eine Mehrzahl von Wärmetauschleitungen (12), die parallel angeordnet sind und mit gegenüberliegenden Enden davon mit den Kopfteilen (11) verbunden sind, wobei ein Kältemittel durch einen Kondensierungsabschnitt (1) kondensiert wird, der durch die Wärmetauschleitungen (12) gebildet ist,
einen Aufnahmebehälter (3), der mit einem Aufnahmebehältereinlass (3a) und einem Aufnahmebehälterauslass (3b) an einem unteren Ende davon bereitgestellt ist, wobei das Kältemittel, das mittels des Aufnahmebehältereinlasses (3a) zugeführt wird, gespeichert wird und nur das verflüssigte Kältemittel aus dem Aufnahmebehälterauslass (3b) strömt, und
ein Verbindungselement (4) zum Verbinden des Aufnahmebehälters (3) mit einem des Paars von Kopfteilen (11),
wobei das Verbindungselement (4) aufweist einen Verbindungselement-Hauptkörper (41), um an dem unteren Ende des Aufnahmebehälters (3) befestigt zu werden, wobei
das Verbindungselement (4) ferner aufweist
einen Einbettungs-Abschnitt (42), der an einem Seitenabschnitt des Verbindungselement-Hauptkörpers (41) bereitgestellt ist, um in das eine des Paars von Kopfteilen (11) eingebettet zu werden, und einen Einlassströmungsdurchgang (4a), der einen Einlassseitenendabschnitt, der an einer oberen Endfläche des Einbettungs-Abschnitts (42) angeordnet ist, um mit dem Kondensierungsabschnitt (1) verbunden zu werden, und einen Auslassseitenendabschnitt hat, der an einer oberen Endfläche des Verbindungselement-Hauptkörpers (41) angeordnet ist, um mit dem Aufnahmebehältereinlass (3a) verbunden zu werden, **dadurch gekennzeichnet, dass**
ein flanschartiges Trennstück (50), das nach Außen vorspringt, integral an einer oberen Endperipherie des Einbettungs-Abschnitts (42) des Verbindungselements (4) gebildet ist, wobei ein peripherer Rand des flanschartigen Trennstücks (50) mit einer inneren peripheren Fläche des einen des Paars von Kopfteilen (11) verbunden ist, und wobei ein Inneres des einen des Paars von Kopfteilen (11) durch das flanschartige Trennstück (50) geteilt ist,
wobei das Kältemittel, das durch den Kondensierungsabschnitt (1) kondensiert wird, in ein Inneres des Aufnahmebehälters (3) mittels des Einlassseitenendabschnitts des Einlassströmungsdurchgangs (4a) in dem Verbindungselement (4) zugeführt wird.

2. Der Wärmetauscher mit einem Aufnahmebehälter (3) gemäß Anspruch 1, wobei derAuslassseitenendabschnitt des Einlassströmungsdurchgangs (4a) des Verbindungselements (4) niedriger als der Einlassseitenendabschnitt angeordnet ist.

3. Der Wärmetauscher mit einem Aufnahmebehälter (3) gemäß Anspruch 1, wobei ein einlassseitiger Halbabschnitt des Einlassströmungsdurchgangs (4a) des Verbindungselements (4) als ein Kältemittelabstiegsdurchgang (40a) zum Absinken des Kältemittels nach unten gebildet ist.

4. Der Wärmetauscher mit einem Aufnahmebehälter (3) gemäß Anspruch 3, wobei der Kältemittelabstiegsdurchgang (40a) angeordnet ist, sodass eine Durchgangsrichtung davon zu einer Achse des einen des Paars von Kopfteilen (11) geneigt ist.

5. Der Wärmetauscher mit einem Aufnahmebehälter (3) gemäß Anspruch 1, wobei ein auslassseitiger Halbabschnitt des Einlassströmungsdurchgangs (4a) des Verbindungselements (4) als ein Kältemittelaufstiegsdurchgang (40b) zum Aufsteigen des Kältemittels nach oben gebildet ist.

6. Der Wärmetauscher mit einem Aufnahmebehälter (3) gemäß Anspruch 5, wobei der Kältemittelaufstiegsdurchgang (40b) angeordnet ist, sodass eine Durchgangsrichtung davon ungefähr parallel zu einer Achse des einen des Paars von Kopfteilen (11) ist.

7. Der Wärmetauscher mit einem Aufnahmebehälter (3) gemäß einem der Ansprüche 1-6, wobei ein Inneres jedes Kopfteils (11) an der gleichen Höhe geteilt ist, um dadurch einen Oberseite-Kondensierungsabschnitt (1) und einen Unterseite-Unterkühlungsabschnitt (2) zu bilden,
wobei das Verbindungselement (4) ferner aufweist einen Auslassströmungsdurchgang (4b), der einen Einlassseitenendabschnitt, der an einer oberen Endfläche des Verbindungselement-Hauptkörpers (41) angeordnet ist, um mit dem Aufnahmebehälterauslass (3b) verbunden zu sein, und einen Auslassseitenendabschnitt hat, der an einem Abschnitt unter dem Einbettungs-Abschnitt (42) angeordnet ist, um mit dem Unterkühlungsabschnitt (2) verbunden zu sein,
wobei das Kältemittel in dem Aufnahmebehälter (3) in den Unterkühlungsabschnitt (2) von dem Auslassseitenendabschnitt des Auslassströmungsdurchgangs (4b) durch den Auslassströmungsdurchgang (4b) des Verbindungselements (4) zugeführt wird.

8. Der Wärmetauscher mit einem Aufnahmebehälter (3) gemäß Anspruch 7, wobei der Auslassseitenendabschnitt des Einlassströmungsdurchgangs (4a) des Verbindungselements (4) an einer Höhe entsprechend dem Unterkühlungsabschnitt (2) angeordnet ist.

9. Ein Kältesystem, in dem ein Kältemittel, das durch einen Kompressor komprimiert wird, durch einen Wärmetauscher mit einem Aufnahmebehälter (3) kondensiert wird, wobei das kondensierte Kältemittel eine Dekompressionsvorrichtung durchströmt, um dekomprimiert zu werden, und wobei das dekomprimierte Kältemittel durch einen Verdampfer verdampft wird und dann zu dem Kompressor rückgeführt wird,
wobei der Wärmetauscher mit einem Aufnahmebehälter (3) ein Wärmetauscher gemäß einem der Ansprüche 1 bis 8 ist.

## Revendications

1. Echangeur de chaleur avec réservoir de réception (3) comprenant :
un corps principal d'échangeur de chaleur (10) comprenant une paire de collecteurs (11) et une pluralité de tubes d'échange de chaleur (12) disposés en parallèle avec leurs extrémités opposées qui communiquent avec lesdits collecteurs (11), dans lequel un réfrigérant est condensé par une partie de condensation (1) constituée par lesdits tubes d'échange de chaleur (12) ;
un réservoir de réception (3) prévu avec une entrée de réservoir de réception (3a) et une sortie de réservoir de réception (3b) au niveau de son extrémité inférieure, dans lequel le réfrigérant introduit via ladite entrée de réservoir de réception (3a) est stocké et seul le réfrigérant liquéfié sort par ladite sortie de réservoir de réception (3b) ; et
un élément de joint (4) pour raccorder ledit réservoir de réception (3) à l'un de ladite paire de collecteurs (11),
dans lequel ledit élément de joint (4) comprend un corps principal d'élément de joint (41) à fixer à l'extrémité inférieure dudit réservoir de réception (3), dans lequel :
ledit élément de joint (4) comprend en outre :
une partie d'encastrement (42) prévue au niveau d'une partie latérale dudit corps principal d'élément de joint (41) à encastrer dans ledit un de ladite paire de collecteurs (11), et un passage d'écoulement d'entrée (4a) ayant une partie d'extrémité du côté de l'entrée disposée au niveau d'une surface d'extrémité supérieure de ladite partie d'encastrement (42) qui est en communication avec ladite partie de condensation (1) et une partie d'extrémité du côté de la sortie disposée au niveau d'une surface d'extrémité supérieure dudit corps principal d'élément de joint (41) qui est en communication avec ladite entrée de réservoir de réception (3a), **caractérisé en ce que** :
une pièce de séparation en forme de bride (50) en saillie vers l'extérieur est formée de manière solidaire au niveau d'une périphérie d'extrémité supérieure de ladite partie d'encastrement (42) dudit élément de joint (4), un bord périphérique de ladite pièce de séparation en forme de bride (50) étant assemblé à une surface périphérique interne dudit un de ladite paire de collecteurs (11) et un intérieur dudit un de ladite paire de collecteurs (11) étant divisé par ladite pièce de séparation en forme de bride (50),
moyennant quoi le réfrigérant condensé par ladite partie de condensation (1) est introduit dans un intérieur dudit réservoir de réception (3) via ladite partie d'extrémité du côté de l'entrée dudit passage d'écoulement d'entrée (4a) dans ledit élément de joint (4).

2. Echangeur de chaleur avec un réservoir de réception (3) selon la revendication 1, dans lequel ladite partie d'extrémité du côté de la sortie dudit passage d'écoulement d'entrée (4a) dudit élément de joint (4) est positionnée plus bas que ladite partie d'extrémité du côté de l'entrée.

3. Echangeur de chaleur avec un réservoir de réception (3) selon la revendication 1, dans lequel une demi-partie du côté de l'entrée dudit passage d'écoulement d'entrée (4a) dudit élément de joint (4) est formée comme un passage de descente de réfrigérant (40a) pour faire descendre le réfrigérant vers le bas.

4. Echangeur de chaleur avec un réservoir de réception (3) selon la revendication 3, dans lequel ledit passage de descente de réfrigérant (40a) est disposé de sorte que sa direction de passage est inclinée vers un axe dudit un de ladite paire de collecteurs (11).

5. Echangeur de chaleur avec un réservoir de réception (3) selon la revendication 1, dans lequel une demi-partie du côté de la sortie dudit passage d'écoulement d'entrée (4a) dudit élément de joint (4) est formée comme un passage de montée de réfrigérant (40b) pour faire monter le réfrigérant.

6. Echangeur de chaleur avec un réservoir de réception (3) selon la revendication 5, dans lequel ledit passage de montée de réfrigérant (40b) est disposé de sorte que sa direction de passage est approximativement parallèle à un axe dudit un de ladite paire de collecteurs (11).

7. Echangeur de chaleur avec un réservoir de réception (3) selon l'une quelconque des revendications 1 à 6, dans lequel un intérieur de chacun desdits collecteurs (11) est divisé à la même hauteur afin de former ainsi une partie de condensation du côté supérieur (1) et une partie de sous-refroidissement du côté inférieur (2);
dans lequel ledit élément de joint (4) comprend en outre un passage d'écoulement de sortie (4b) ayant une partie d'extrémité du côté de l'entrée, disposée au niveau d'une surface d'extrémité supérieure dudit corps principal d'élément de joint (41) pour communiquer avec ladite sortie de réservoir de réception (3b) et une partie d'extrémité du côté de la sortie, disposée au niveau d'une partie au-dessous de ladite partie d'encastrement (42) pour communiquer avec ladite partie de sous-refroidissement (2),
moyennant quoi le réfrigérant dans ledit réservoir de réception (3) est introduit dans ladite partie de sous-refroidissement (2) à partir de ladite partie d'extrémité du côté de la sortie dudit passage d'écoulement de sortie (4b) à travers ledit passage d'écoulement de sortie (4b) dudit élément de joint (4).

8. Echangeur de chaleur avec un réservoir de réception (3) selon la revendication 7, dans lequel ladite partie d'extrémité du côté de la sortie dudit passage d'écoulement d'entrée (4a) dudit élément de joint (4) est disposée à une hauteur correspondant à ladite partie de sous-refroidissement (2).

9. Système de réfrigération dans lequel un réfrigérant comprimé par un compresseur est condensé par un échangeur de chaleur avec un réservoir de réception (3), le réfrigérant condensé passe par un dispositif de décompression pour être décomprimé et le réfrigérant décomprimé s'évapore grâce à un évaporateur et ensuite revient vers ledit compresseur,
dans lequel ledit échangeur de chaleur avec un réservoir de réception (3) est un échangeur de chaleur selon l'une quelconque des revendications 1 à 8.
